(19)

Europäisches
Patentamt

European
Patent Office

Office européen
des brevets

(11)  **EP 1 695 894 B1**

(12)  **EUROPEAN PATENT SPECIFICATION**

(45) Date of publication and mention
of the grant of the patent:
**11.08.2010   Bulletin 2010/32**

(51) Int Cl.:
***B62D 6/00*** *(2006.01)*

(21) Application number: **05101351.4**

(22) Date of filing: **23.02.2005**

(54) **Method and device for yaw control of a vehicle**

Methode und Vorrichtung zur Gierratenkontrolle eines Fahrzeugs

Méthode et appareil pour le contrôle du lacet d'un véhicule

(84) Designated Contracting States:
**DE FR GB**

(43) Date of publication of application:
**30.08.2006   Bulletin 2006/35**

(73) Proprietor: **Ford Global Technologies, LLC, A
subsidary of Ford
Motor Company
Dearborn, MI 48126 (US)**

(72) Inventors:
• **Burgio, Gilberto
52080 Aachen (DE)**

• **Zegelaar, Peter
6418 JD Heerlen (NL)**

(74) Representative: **Drömer, Hans-Carsten et al
Ford-Werke Aktiengesellschaft
Patentabteilung NH-364
Henry-Ford-Str. 1
50735 Köln (DE)**

(56) References cited:
**DE-A1- 4 010 332        DE-A1- 10 319 177
DE-A1- 10 329 278        DE-A1- 10 341 412
DE-A1- 19 751 227**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method and a control device for the control of the yawing motion of a vehicle.

Vehicle Motion Control has been broadly addressed and well-established solutions are already in the market, like yaw control using braking actuators. The available controllers find linear solutions around current working points, resulting then in proportional like gain-scheduling (ESP brake control) and the validity of those controllers are restricted to a neighbourhood of the working point, therefore are sometimes limited in module or duration. This can be conflicting using the steering actuator, i.e. in case of heavy over/under-steering manoeuvres, when the driver could give very wrong steering input and the smart steering actuator could and should correct with heavy counter-steering. Regarding integrated control solutions for steering and brakes (traction), only concepts are proposed, without the definition of the control actions.

Established solutions are consolidated as well for Variable Gear Ratio (VGR) functions, where, using an Active Front Steering (AFS) or Steer by Wire (SBW) actuators, the gear ratio is changed to higher values for higher vehicle speed and to lower values for lower vehicle speed, obtaining then either good steering response for low vehicle speed or smooth vehicle reaction for high vehicle speed.

From DE 40 10 332 A1 a method for controlling yawing motion of a vehicle is known which basically uses a steering actuator. If however yawing motion or lateral acceleration cross given thresholds and the brakes are actuated by the driver, then braking actuators are additionally applied to guarantee stability of the vehicle.

Based on this situation it was an object of the present invention to provide a unique controller concept to supply stable vehicle behaviour and comfort driving. This object is achieved by a method according to claim 1 and by a control device according to claim 8. Preferred embodiments are disclosed in the dependent claims.

In a yaw control method for a vehicle with a steering actuator and a direct yaw moment actuator, wherein the steering actuator is used as long as it is sufficient for a stable tracking of a target yaw rate, and wherein the direct yaw moment actuator is only used to assist said tracking if necessary and/or to prevent critical instabilities, the vehicle dynamics are modelled according to

$$
\mathrm{P}:\begin{cases} \dot{v}_y = -v_x v_\psi + \dfrac{\mu}{m}\Big(F_{yf}(x,\delta_D + \delta_C, F_{zf:}, k_{f:}) + F_{yr}(x, F_{zr:}, k_{r:})\Big) \\[4mm] \dot{v}_\psi = \dfrac{\mu}{J}\Big(F_{yf}(x,\delta_D,\delta_C, F_{zf:}, k_{f:})l_f - F_{yr}(x, F_{zr:}, k_{r:})l_r\Big) + \dfrac{M_B}{J} \end{cases} \tag{3}
$$

where

| | |
|---|---|
| $m$ | vehicle mass (Kg) |
| $J$ | vehicle inertia momentum (kg m$^2$) |
| $l_f$, $l_r$ | front and rear vehicle length (m) |
| $V_x$ | vehicle longitudinal velocity (m/s) |
| $V_y$ | vehicle lateral velocity (m/s) |
| $V_\psi$ | vehicle yaw velocity (m/s) |
| $x=[V_y, V_\psi]'$ | compact vehicle state vector |
| $\mu$ | maximum tire-road friction coefficient |
| $k_{ij}$ | tires longitudinal slip (front left, front right, rear left, rear right) |
| $F_{zij}$ | tires vertical forces (front left, front right, rear left, rear right) (N) |
| $\delta_D$ | driver road wheel angle component (rad) |
| $\delta_C$ | controller road wheel angle component (rad) |
| $M_B$ | Yaw Moment, resulting from controller active braking (Nm) |
| $F_{yf}$, $F_{yr}$ | $\mu$-normalised tires lateral forces |

and the actuators are controlled with a full multiple-input multiple-output feedback linearization controller.

According to an embodiment, the method is characterised by a linear module defining a target yaw rate, and a nonlinear module calculating the associated commands for the steering actuator and/or for the yaw moment actuator.

If the control is split in the aforementioned way into a linear and a nonlinear module, the nonlinear module preferably first defines the $\mu$-normalised Front Wheel Force Target value considering the $\mu$-normalised rear tire characteristic and then defines the active steering correction trough $\mu$-normalised front tire characteristic inversion and additional state correction.

The vehicle dynamics is modelled by equation (3) cited above. An advantage of this equation is that it comprises only two independent state variables - yaw rate and lateral velocity -, which makes treatment of this equation feasible.

According to another approach, the predetermined target yaw rate may be corrected in order to prevent critical instabilities of the vehicle behaviour. An advantage of this approach is that measures to counteract instabilities can be initiated at a very early stage.

The method may optionally further comprises a preventive pre-charging of breaks in order to minimise reaction times.

Moreover, the method may optionally incorporate Variable Gear Ratio (VGR) functionality.

The invention further comprises a yaw control device for a vehicle which may for example be realised by a microprocessor together with appropriate software. The yaw control device may be a separate device or a sub-module of other vehicle controllers. The yaw control device is characterised in that it is adapted to execute a method of the kind described above.

In the following, the invention is described by way of example with reference to the accompanying Figures with the following contents:

Fig.1: Overall Control Scheme Block Diagram, as classically intended. The driver, through the Steering Wheel Angle (SWA), gives the target ve- hicle lateral behaviour; the Driver Evaluator (DE) interprets this input and defines the target yaw rate. The Vehicle State Estimator (VSE) or Vehicle State Observer (VSO) provides non-measured signals to the yaw/stability controller (YC).

Fig.2: Yaw/Stability controller overall view.

Fig.3: Feedback Linearization Controller Structure. The overall yaw controller is structurally split in two parts, a linear and a non-linear one.

Fig.4: Controller linear part. The linear controller is like a classical P or PI controller with antiwindup, with additional feed-forward term, namely the time derivative of the yaw rate target. The output is dimensionally a yaw acceleration, which is multiplied by the vehicle inertia momentum to obtain the target yaw moment, needed to track the target yaw rate.

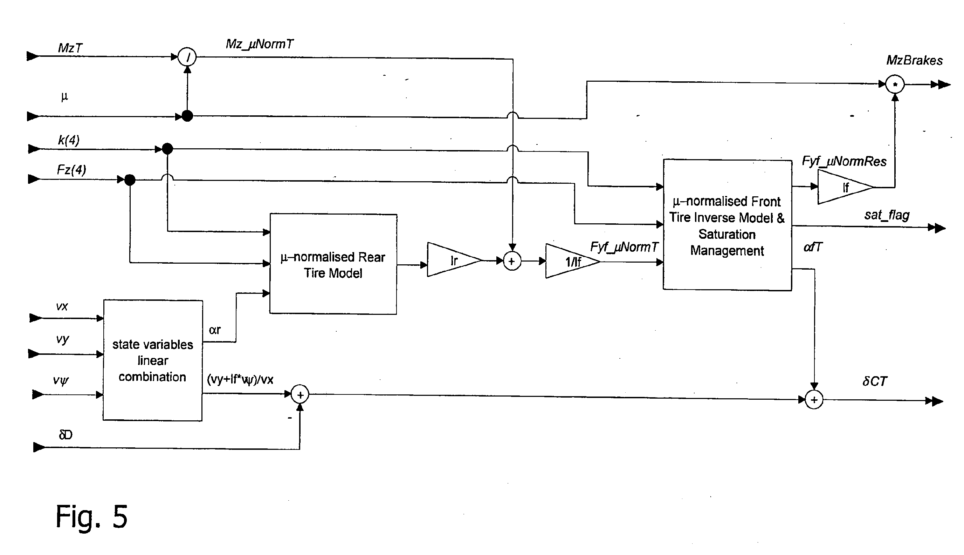

Fig. 5: Controller non-linear part. The computation chain $\mu$-normalises the Target Yaw Moment, and computes the $\mu$-normalised yaw moment to be supplied by the front tires. The front tires model inversion gives the target front slip angle, from which it's easy to obtain the target active steering angle ($\mu_{CT}$) and the residual lateral force which the front tires cannot deliver and will therefore generate a target yaw moment to the brakes actuators ($M_{zBrakes}$). When the front tires are saturating, a flag sat_flag is generated to avoid integral terms divergence.

Fig. 6: $\mu$-normalised Lateral Force Front Tire Inverse Model & Saturation Management.

Fig. 7: $\mu$-normalised Lateral Force Front Tire Inverse Model. This block defines the $\mu$-normalised static front tires characteristic inverse model, in this case with a look-up table.

Fig. 8: Lateral Force Front Tire Saturation Management. The instant when the front tires saturate is found with the help of a look-up table, which defines the $\mu$-normalised maximum static tire force that can be delivered accordingly with the current values of vertical force and longitudinal slip. If the $\mu$-normalised target force is bigger than this, the front tires will saturate, a saturation flag will be generated and a residual $\mu$-normalised non-steer-feasible force is computed.

Fig. 9: $\mu$-normalised Lateral Force Rear Tire Direct Model. This block defines the static rear tires characteristic direct model, in this case with a look-up table.

Fig. 10: Nonlinear feedback effect on state I/O relation. This picture describes how SISO feedback linearization transforms the original vehicle model in a new system with one "non-yaw rate-observable", "non-steer-controllable state" ($\xi$). Lateral velocity ideally results steer-controllable and not yaw rate-observable.

The following Figures comprise a description of simulation data, obtained using the accurate VeDyna vehicle model as Plant, the standard VeDyna Driver to conduct the manoeuvre and the proposed yaw control. Moreover a standard state estimator is used to provide the lateral velocity (with up to 40% of estimation error), a standard Driver Evaluator generated the target and the road is supposed to be dry.

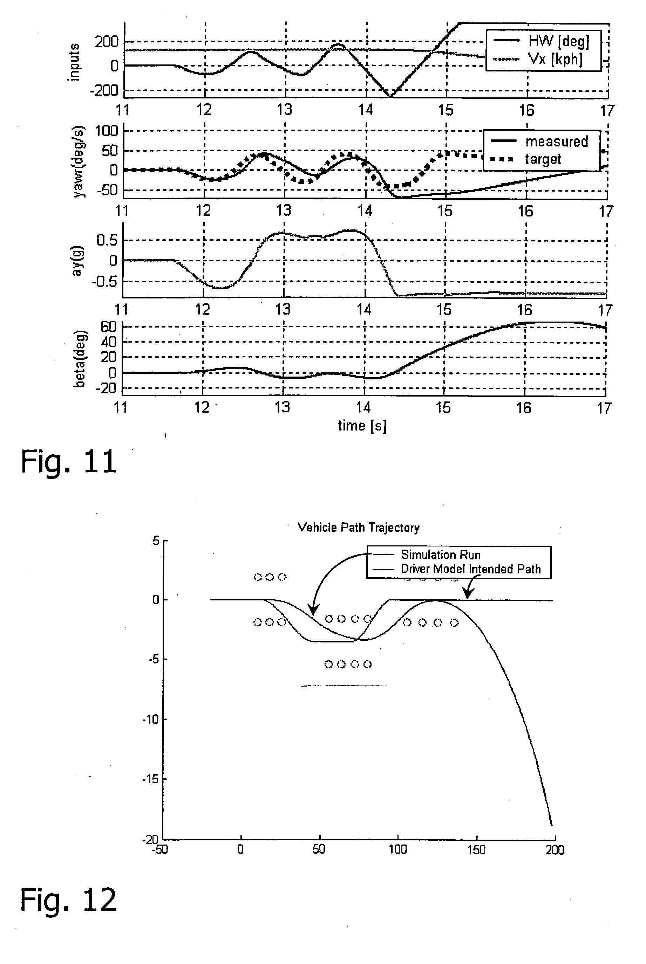

Fig. 11: Double Lane Change 130kph, states and I/Os, passive vehicle. The system goes spinning at the end of the manoeuvre, the driver tries to catch the vehicle back with a final heavy counter-steering (but too late).

Fig. 12: Double Lane Change 130kph, vehicle trajectory, passive vehicle. The manoeuvre fails.

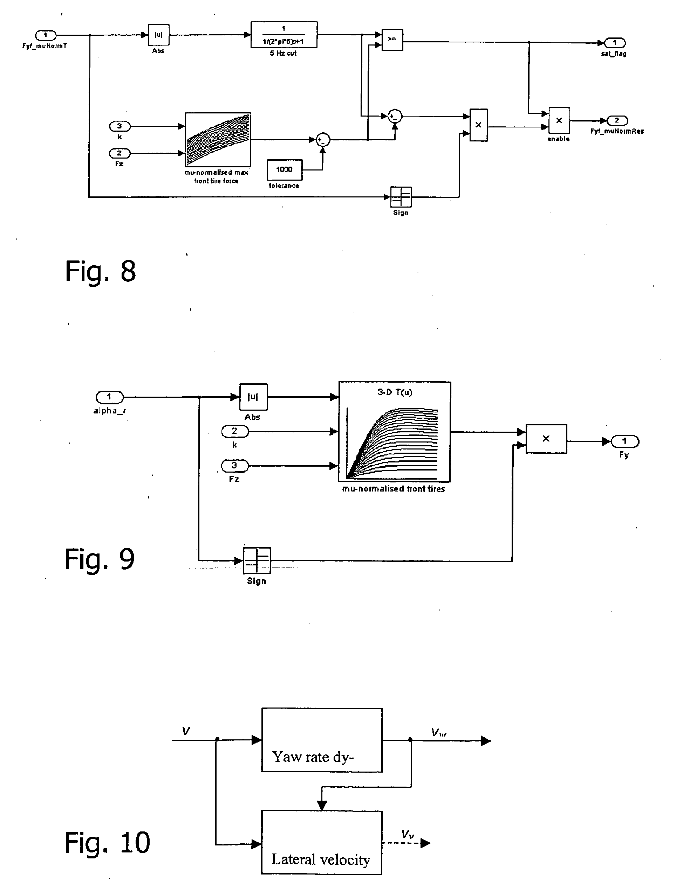

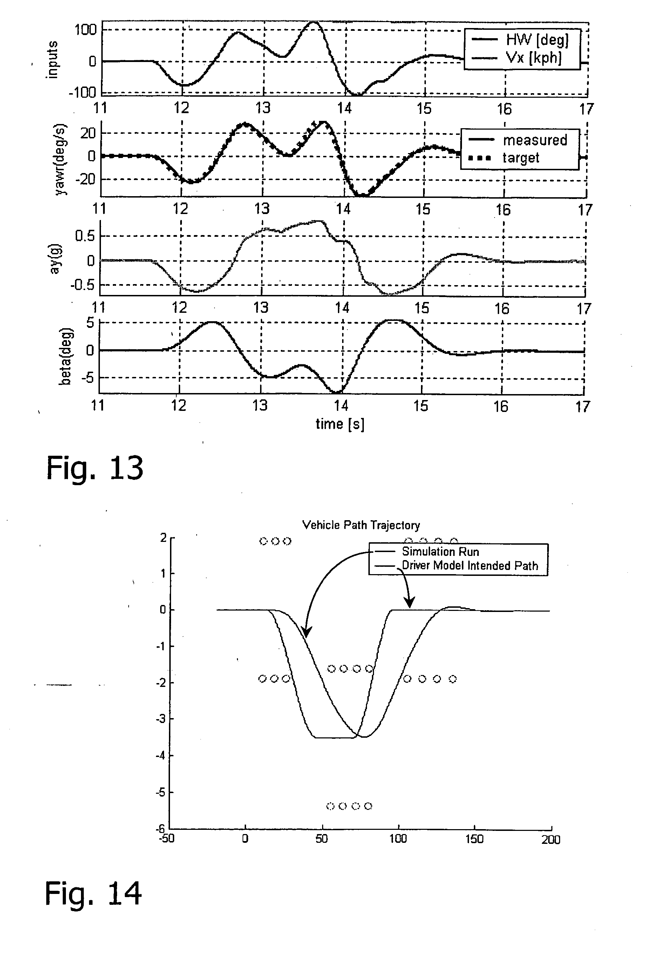

Fig. 13: Double Lane Change 130kph with integrated vehicle control, states and I/Os. The I/Os and states are smooth and limited to reasonable values. The yaw rate tracking is excellent. Notice that the yaw rate follows always the driver command (VWA), independently from the unobservable state (beta), according to Fig. 9.

Fig. 14: Double Lane Change 130kph with integrated vehicle control, vehicle trajectory. The manoeuvre succeeds.

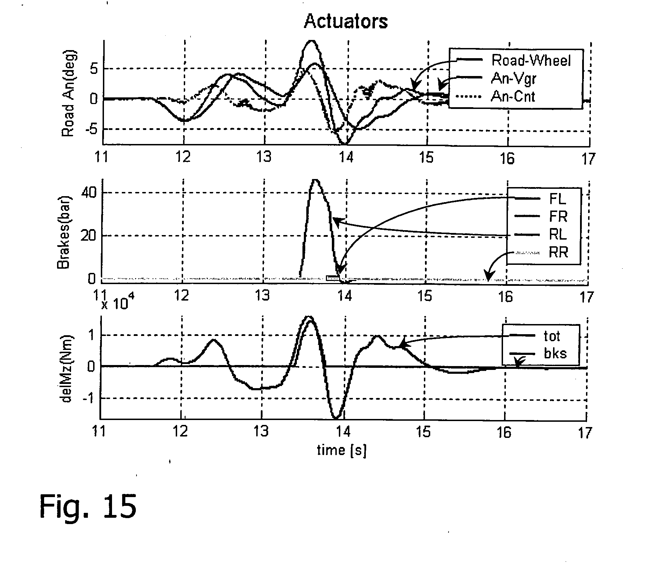

Fig. 15: Double Lane Change 130kph with integrated vehicle control, actuators action. The steering and brakes work together to make the manoeuvre according to the target. The active control results in a phase advance during the first oversteering (AFS is countersteering), in a cooperation action steering and brakes (rear left wheel brake) to obtain the high 2nd yaw rate positive peak, in a second heavy countersteer stabilising the vehicle exiting the 2nd lane and in a final last countersteering at the end of the manoeuvre to restore the straight directionality in the 1st lane.

DETAILED DESCRIPTION OF THE PREFERRED EMBODIMENT

The invention proposes a model based compact vehicle control methodology integrating steering and braking smart actuators and automatically incorporating VGR functionality.

The basis of the invention is a high performing global nonlinear yaw control methodology with focus on the only steering actuator, extended then to manage the brakes, too.

The final proposed integrated controller, resulting from the application of Feedback Linearization technique, suggest a base steering controller and activates the brakes either in understeer situations (oversteer brakes correction) or in oversteer instable situations (understeer brakes corrections). This is mostly in line with what a vehicle dynamic expert would do and the limitations of the proposed method are in line with the physical limits.

Moreover this solution is one level more extended to cope with 2 continuous actuators like steering and traction.

The controller design parameterisation needs knowledge of the vehicle geometry, masses, inertias, tires maximum friction coefficient and of tires characteristics (the only source of nonlinearity); moreover the signals yaw rate, lateral velocity, longitudinal velocity and steering angle are needed in real time (timing ~10-20ms) to close the control loop.

The parameters are all normally known with given accuracy, except for the friction coefficient (depends on the road surface state, on the tire wear, on weather conditions, etc) that can vary so much that has to be considered known only in range [0.1(slippery)-1(dry)]. In the preferred embodiment of the invention the maximum friction coefficient is supposed to be fixed or online estimated in a separated module.

The input signals to the controller are standard and normally available for a yaw control strategy, except for the lateral velocity; this is not measured due to cost reasons, but estimated. This estimation, which uses standard vehicle measurements (vehicle speed, Steering Wheel Angle (SWA), longitudinal velocity and lateral acceleration) heavily depends on the model accuracy, therefore cannot be very good and the control design needs to be robust versus this variation (~20%).

The proposed yaw control design using the only steering actuator is capable of giving smooth active steering corrections resulting in smooth yaw tracking. Therefore its action can be continuous and not limited to only stability situations.

This concept allows the definition of the vehicle behaviour via software through the Driver Evaluator component, with the only constraint that the behaviour itself is feasible with the given vehicle and actuator set, resulting in vehicle more or less reactive to driver steering input (generalised VGR functionality).

The vehicle can be described as a rigid body moving in the space, therefore with 6 Degrees of Freedom (DoF) $(x,y,z,\varphi,\theta,\psi)$. This rigid body is connected with the ground surface through tires, which give to the complete model high nonlinear behaviour and high coupling effects of the 6 body DoF.

The actuators used are:

• active steering (AFS, SBW, ...);

• active brakes, nominally smart brake actuators, where target longitudinal (negative) forces (or equivalently longitudinal slips) can be commanded;

• alternatively to the active brakes are other actuator whose action can be equivalently modelled with a Direct Yaw Moment in (2);

For the purpose of the yaw control design the plant complexity can be lowered considering that:

• The most relevant dynamics are yaw rate ($v_\psi$) and lateral velocity ($v_y$), therefore only 2 DoF are considered.

• The steering actuator dynamics is modelled as a transfer function, with response time of ~100ms.

• The selective braking actuator action results in an equivalent Yaw Moment on the vehicle, around its z-axis, without any direct effect on the lateral velocity dynamics.

• The brake actuator dynamics can be approximated with a transfer function with -300ms of response time (worst case from cruising to full brakes).

- The tires need to be modelled to reproduce the only lateral force characteristics (*Fy*). The Fx-y interaction is considered with the longitudinal slip effect on Fy.

- Tires dynamics can be neglected, as of frequency content of about 50Hz, vs. -5 Hz bandwidth of interest for the vehicle ($v_y$, $v_\psi$) dynamics.

The considered plant model is the following:

$$\begin{cases} m(\dot{v}_y + v_x v_\psi) = \mu\left(F_{yf}(x,\delta_D + \delta_C, F_{zf:}, k_{f:}) + F_{yr}(x, F_{zr:}, k_{r:})\right) \\ J\dot{v}_\psi = \mu\left(F_{yf}(x,\delta_D + \delta_C, F_{zf:}, k_{f:})l_f - F_{yr}(x, F_{z:}, k_{r:})l_r\right) + M_B \end{cases} \tag{1}$$

where

| | |
|---|---|
| $m$ | vehicle mass (Kg) |
| $J$ | vehicle inertia momentum (kg m$^2$) |
| $l_f$, $l_r$ | front and rear vehicle length (m) |
| $v_x$ | vehicle longitudinal velocity (m/s) |
| $v_y$ | vehicle lateral velocity (m/s) |
| $v_\psi$ | vehicle yaw velocity (m/s) |
| $x=[v_y, v_\psi]'$ | compact vehicle state vector |
| $\mu$ | maximum tire-road friction coefficient |
| $k_{ij}$ | tires longitudinal slip (front left, front right, rear left, rear right) |
| $F_{zij}$ | tires vertical forces (front left, front right, rear left, rear right) (N) |
| $\delta_D$ | driver road wheel angle component (rad) |
| $\delta_C$ | controller road wheel angle component (rad) |
| $M_B$ | Yaw Moment, resulting from controller active braking (Nm) |

and the $\mu$-normalised tires lateral forces are defined as functions of tires slip angles ($\alpha_f$, $\alpha_r$), vertical forces and longitudinal slips as sum of the left-right components, according to:

$$\begin{cases} F_{yf}(x,\delta_D + \delta_C, F_{zf:}, k_{f:}) = F_{yf}(\alpha_f, F_{zf:}, k_{f:}) = F_{yfl}(\delta_D + \delta_C - \dfrac{v_y + l_f v_\psi}{v_x} F_{zfl}, k_{fl}) \\ \qquad\qquad\qquad\qquad + F_{yfr}(\delta_D + \delta_C - \dfrac{v_y + l_f v_\psi}{v_x} F_{zfr}, k_{fr}) \\ F_{yr}(x, F_{zr:}, k_{r:}) = F_{yr}(\alpha_r, F_{zr:}, k_{r:}) = F_{yrl}(-\dfrac{v_y - l_f v_\psi}{v_x} F_{zrl}, k_{rl}) + F_{yrr}(-\dfrac{v_y - l_f v_\psi}{v_x} F_{zrr}, k_{rr}) \end{cases} \tag{2}$$

Rewriting the plant equations in state space form, the control problem (CP) can be stated as:

*Given the plant*

$$P: \begin{cases} \dot{v}_y = -v_x v_\psi + \dfrac{\mu}{m}\left(F_{yf}(x,\delta_D + \delta_C, F_{zf:}, k_{f:}) + F_{yr}(x, F_{zr:}, k_{r:})\right) \\ \dot{v}_\psi = \dfrac{\mu}{J}\left(F_{yf}(x,\delta_D, \delta_C, F_{zf:}, k_{f:})l_f - F_{yr}(x, F_{zr:}, k_{r:})l_r\right) + \dfrac{M_B}{J} \end{cases} \tag{3}$$

*and given* a yaw *rate reference ($V_{\psi d}$), find the control* law $u(x)=[\delta_c(x, v_{\psi d}), M_B(x, V_{\psi d})]$ *to insure:*

1. *Global Stability*
2. *Yaw rate tracking:* $|v_{\psi d}-v_\psi|<tolerance$
3. *Comfort driving*

The first and second requirement is typical for every control problem.

The last requirement implies that the control action must be smooth and the braking actuators (on-off like) should be rarely activated, as every selective wheel braking action $M_B$ has negative effects on comfort.

Therefore the following choice is made:

- normally the control uses only the steering actuator to track the target yaw rate, i.e. the control problem is Single Input Single Output (SISO);

- in particular instances, when the steering actuator is no more enough to control the vehicle according to the target or when risk of instability occurs, both actuators need to be managed in parallel (control problem is Multiple Output, SIMO or MIMO).

The design choice is to first focus on the solution of SISO problem, because it will give the control configuration more often active, therefore most relevant. A good SISO design will then lead to the minimization of the time instances where the solution multiple actuator solution is needed.

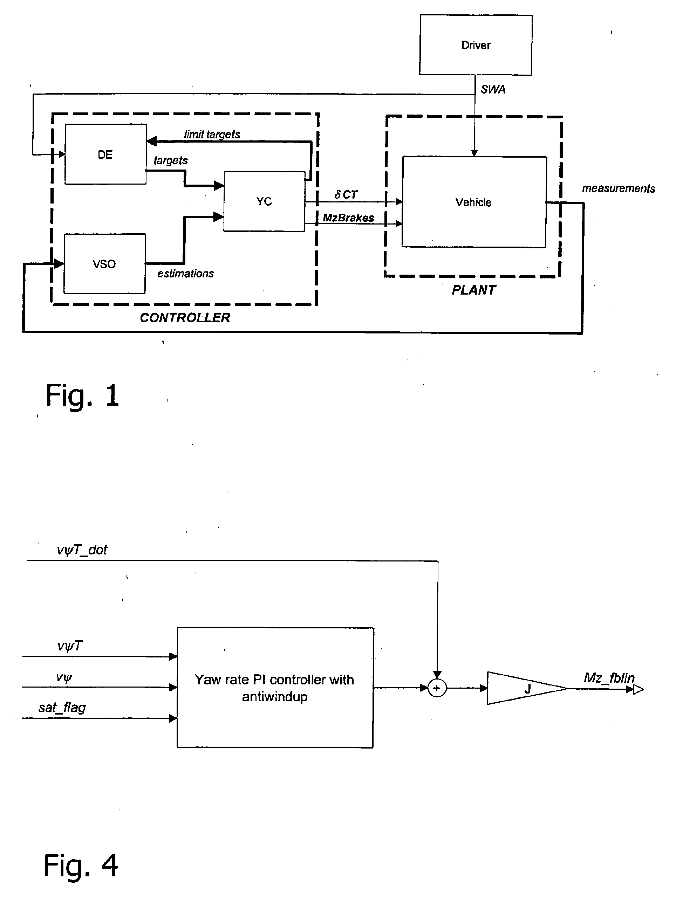

The proposed control structure is shown in Fig. 1, according to well-known architectures. In particular, the functions involved are:

- DE, driver evaluator, to shape the yaw rate target ($v_{\psi d}$);
- VSO, vehicle state observer, to estimate non-measured signals, which in this case are:

  Lateral velocity ($v_y$);
  Tires Vertical forces ($F_{zij}$)(4)
  Tires longitudinal slip ($k_{ij}$) (4)
  Vehicle longitudinal velocity ($v_x$)

- YC, yaw controller.

The measurements are yaw rate, lateral acceleration, steering angle, as with commercial solutions.

The yaw controller gives in output the commands to the actuators and, in the cases where the yaw rate target is too high and can generate vehicle instability, generates the signal 'limit targets'. This will be clarified in the following paragraphs.

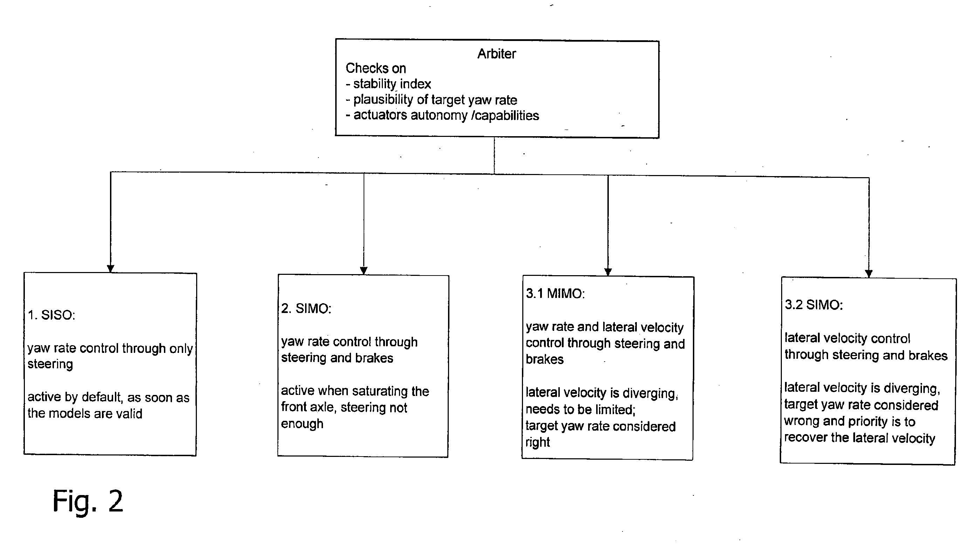

The control architecture is high level described in Fig. 2.

Four control strategies are proposed, activated by an arbiter. The control strategies are:

1. SISO, yaw rate control through steering. The implementation is described in paragraph §1.

2. SIMO, yaw rate control through steering and brakes. The implementation is described in §1.

3. MIMO, yaw rate and lateral velocity control through steering and brakes. The implementation is described in §2.

4. SIMO, lateral velocity control through steering and brakes. The implementation is described in §2.

Control strategies 1,2 are designed under steering priority assumption (braking is slave/support), and are the result of FL design method, extended for the case of actuator saturation; strategy 4 is designed under braking priority assumption (steering is slave/support), should be seldom activated, only when critical instabilities are occurring, strategy 3 makes no assumption on which actuator to use, but directly applies a MIMO solution and should as well be seldom activated, only when steering cannot stabilise the vehicle behaviour.

The arbiter chooses the active controller depending on conditions, which will be in the next clarified.

1. Single Output Control (CPSO) - Steering

Given the control problem CP, the goal is to find the controller $u(x)=[\delta_c(x)]$.

Since the plant is low state dimension (2), relative degree 1, nonlinear and the control (u) dimension is 1, the situation is convenient for the application of *state feedback linearization* method, without the drawback of a too complex solution.

The main problem in the plant expression (3) is that the steering control input ($\delta_C$) appears in a 'non-affine' form in the non-linear tire model.

Instead of linearizing $F_{yf}(.,\delta_c)$, that is the usual solution in known methodologies, this embodiment fully treats its non-linear nature, with the following steps:

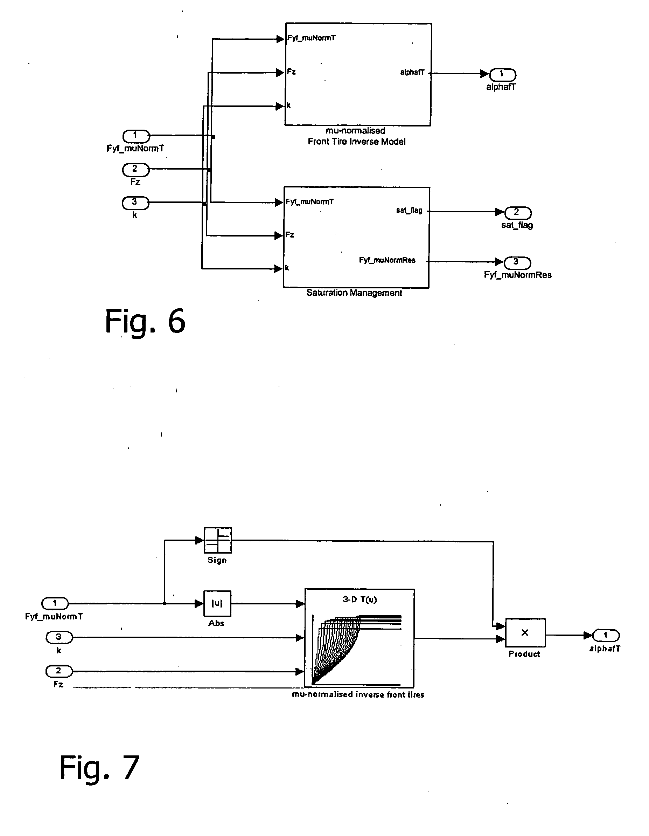

1. consider $F_{yf}()$ to be a direct actuation;
2. design the controller accordingly, obtain the target value $F_{yfT}$;
3. compute the steering actuation $\delta_C$ inverting the function $F_{yf}()$ for all the points with positive tire gradient and saturating the inverse-function when the tire saturates (Fig. 6).

This choice, without making heavy and restricting assumptions, keeps the solution simple enough to be treated.

*STATEMENT 1.*

*If:*
**hip.1: invertibility condition**

$$F_{yf}(\delta_C + \delta_D + \frac{v_y + l_f v_\psi}{v_x}, F_{zf:}, k_{f:}) \quad \text{is } \delta_D \text{ invertible} \tag{4}$$

*for every feasible value of yaw rate, lateral velocity, longitudinal velocity, vertical forces (left and right) and longitudinal slips (left and right);*
**hip.2: zero dynamics stability**

*defined the new state variable* $\zeta = v_\psi - \dfrac{l_f m}{J} v_y$, *the solution $\xi(t)$ of the differential equation*

$$\begin{cases} J\dot{\zeta} = -\mu(l_f + l_r)F_{yr}\left(\frac{J}{l_f m v_x}\zeta + \frac{1}{v_x}(l_r - \frac{J}{l_f m})v_{\psi d}, F_{zr:}, k_{r:}\right) + l_f m v_x v_{\psi d} \\ \zeta(0) = 0 \end{cases} \tag{5}$$

*is bounded and uniformly asymptotically stable for every feasible value of the target yaw rate, longitudinal velocity, vertical forces (left and right) and longitudinal slips (left and right);*
**then**
**state feedback linearization steering control law**

$$\delta_C = -\delta_D + \frac{v_y + l_f v_\psi}{v_x} + F_{yf}^{-1}\left[\frac{1}{l_f}\left(l_r F_{yr}(\alpha_{r,.}) + \frac{J}{\mu}v\right)\right] \tag{6}$$

$$v = \dot{v}_{\psi d} + \alpha(v_{\psi d} - v_\psi) + \beta\int(v_{\psi d} - v_\psi)dt \tag{7}$$

*is applicable to the problem CPSO insuring stability, reference tracking and robustness versus additive plant inaccuracies.*

$v_{\psi d}$ *is the target yaw rate, smooth and bounded function, and* $\alpha\beta$ *are chosen* so *that* ($s^2+\alpha s+\beta$) *is stable.*

Proof outline:

Substituting the controller (6), in the yaw rate equation in plant (3), under condition (4), it results:

$$\dot{v}_\psi = v + \Delta P \qquad\qquad (8)$$

where $\Delta P$ represents an additive inaccuracy in the plant inversion (i.e. inaccuracy in the rear tire characteristic $F_{yr}$ or other) and substituting eq. (7):

$$(\dot{v}_{\psi d} - \dot{v}_\psi) + \alpha(v_{\psi d} - v_\psi) + \beta \int (v_{\psi d} - v_\psi) dt = \Delta P$$

This, transformed in Laplace domain is:

$$(v_{\psi d} - v_\psi) = \frac{s}{s^2 + \alpha s + \beta} \Delta P \qquad\qquad (9)$$

which shows that the yaw rate error is a stable function, and that asymptotic tracking is insured in the case of constant additive errors in the plant yaw rate equation modelling.

The condition (5) insures that the non-controlled dynamic (lateral velocity) is stable, too.

The controller functionally splits in two parts:

- one nonlinear, containing all vehicle information, which de facto transforms the original nonlinear plant P into the simpler 1st order linear one (8);

- one linear, which imposes the desired performance with a PI like term.

Figure 10 shows the original system transformed in 2 subsystems, one contributing to the I/O chain and the other, the zero dynamics, that feedback linearization law (6,7) made unobservable from the yaw rate. Notice that the yaw rate dynamic results independent from lateral velocity, but not vice-versa.

COMMENTS

1. The saturation of the inverse front tire characteristic (Fig.6) in understeering situations is the best that the steering controller can do, that is, keep the front slip angle to the minimum value still supplying the maximum lateral force.

2. Equation (5) describes a stable system if the rear tires are not saturating, as $F_{yr}$ is a monotonically increasing function of $\zeta$. If saturation occurs and $\mu \, lF_{yr}(.) < l_f m v_x v_{\psi d}$ then the state $\zeta$ integrally diverges. Considering the plant equations (3) in steady state, eliminating the front tire lateral force the following equation is obtained:

$$-\mu(l_f + l_r)F_{yr}(.) + l_f m v_x v_\psi = 0 \qquad\qquad (10)$$

and, if rear tire saturates and the yaw rate (longitudinal velocity) is high enough to make condition $\mu\ IF_{yr}(.) < I_f m v_x v_\psi$ true, then the steady state is not feasible and some state will diverge.

Therefore equation (5) shows a physical limit of the system, independent from the adopted steering control. From the vehicle dynamics point of view, this means that the equilibrium of the state $\zeta$ (or of lateral velocity) is given by the equality of the force generated by the tires and the centrifugal force. But the centrifugal force grows with the yaw rate and the vehicle speed, while tire force is limited by the tire characteristic; therefore if the yaw rate is causing a centrifugal force higher then the force the tires can counteract, the lateral velocity will integral like diverge. This event should be avoided or at least taken under control avoiding lateral velocity reaching "too big" values.

## 2. Multiple Output Control (MOCP) - Steering & Brakes

The multiple output control approach takes full advantage from the Single output case, and extends it.

Considering the problem CP the control $u(x)=[\delta_c(x),\ M_B(x)]$ is chosen as follows:

- The active steering control law $\delta_c(x)$ is chosen according to (6), (7) in all the cases this actuator can give good yaw rate tracking, which is when the front tires are not saturating. This is in line with the previously stated "steering priority" assumption.

- If the front tires saturate and the yaw control system is still asking for higher lateral forces, then the braking actuator in (3) $M_B$ is used to deliver the residual yaw moment not feasible for the steering (under-steer-like brakes correction, *braking on the rear inner wheel*).

- If the rear tires are saturating and the rear axle cannot balance the centrifugal force (ZERO DYNAMICS INSTABLE), then the braking actuator in (3) is activated in a stabilising action on the zero dynamics,

$$\begin{cases} J\dot{\zeta} = -\mu(l_f + l_r)F_{yr}\left(\frac{J}{l_f m v_x}\zeta + \frac{1}{v_x}(l_r - \frac{J}{l_f m})v_{\psi d}, F_{zr}, k_r\right) + l_f m v_x v_{\psi d} + M_B \\ \zeta(0) = 0 \end{cases} \qquad (11)$$

independently from the target yaw rate (over-steer-like brakes correction, *braking on the front outer wheel*).

A minimum effort controller to reduce the value of $|\zeta|$ is:

% BRAKES CORRECTION OVERSTEERING

$$M_{B\_OV} = -\text{sign}(v_\psi)\,{}^*\max(|l_f m v_x v_\psi| - \frac{\mu(l_f + l_r)}{K_\zeta}F_{yrMAX}(F_{zr}, k_r), 0)$$

**ELSE** $\qquad\qquad\qquad\qquad\qquad\qquad\qquad\qquad\qquad\qquad\qquad$ (12.1)

$$M_{B\_OV} = 0$$

**ENDIF**

where $K_\zeta$ [1..∞] is a tuning parameter which acts in a proportional way to increase the speed of convergence of the state $\zeta$ to zero.

Moreover, the proposed steering controller is extended to include the brake correction resulting in:

% COMPUTATION OF STEERING CORRECTION

$$v = \dot{v}_{\psi d} + \alpha (v_{\psi d} - v_\psi) + \beta \int (v_{\psi d} - v_\psi) dt \tag{12.2}$$

$$F_{yfT} = \frac{l_r}{l_f} F_{yr}(\alpha_r, F_{zr.}, k_{r.}) + \frac{1}{\mu l_f}(Jv - M_{B\_OV}) \tag{12.3}$$

$$\delta_C = -\delta_D + \frac{v_y + l_f v_\psi}{v_x} + F_{yf}^{-1}(F_{yfT}, F_{zf.}, k_{f.}) \tag{12.4}$$

% BRAKES CORRECTION UNDERSTEERING

**IF (FRONT TIRE SATURATES)**

$$M_{B\_UN} = \mu l_f \, \text{sign}(F_{yfT}) * \max(|F_{yfT}| - F_{yfMAX}(F_{zf.}, k_{f.}), 0)$$

**ELSE** $\tag{12.5}$

$$M_{B\_UN} = 0$$

**ENDIF**

The total brake correction will be then the sum of the oversteer and understeer corrections:

$$M_B = M_{B\_UN} + M_{B\_OV} \tag{12.6}$$

Note that the described integrated control action through steering and brakes is well coordinated as:

- in the case of heavy under-steering brakes correction (front tire saturation) the integration is achieved by definition, as both actuators try to achieve the target yaw rate tracking;

- in the case of the over-steering brakes correction (zero dynamics instability), the integration is well defined as:

  - first the braking correction MB_OV (12.1) is computed, to stabilize $\zeta$;

  - then the yaw rate tracking term through the steering (12.2,3,4) is computed, taking into account of the above braking yaw moment. $\zeta$ isn't controllable through the steering, therefore this action will not corrupt the previous one.

The target force introduced in (12.3) is $\mu$-normalized, like tire forces in the entire article.
A variant to the proposed method to obtain the maximum $v_y$ stabilising effect in zero dynamics instability case is the following:
% STEERING CORRECTION OVERSTEERING, STEERING SLAVE TO BRAKES

## IF (ZERO DYNAMICS INSTABLE)

$$F_{yfT} = 0 \quad \text{(or equivalently)} \quad \delta_C = -\delta_D + \frac{v_y + l_f v_\psi}{v_x} \tag{13}$$

## ENDIF

which means that in oversteering instability situations, the front tires are aligned to the direction of motion to get maximum advantage from the braking action on the front outer wheel.

An extension of the previous controller is found applying MIMO feedback linearization approach to the plant (3), rewritten in the form:

$$\dot{x} = f(x) + g(x)u$$

with

$$x = \begin{bmatrix} v_\psi \\ \zeta \end{bmatrix}; \qquad u = \begin{bmatrix} F_{fy} \\ M_B \end{bmatrix}$$

$$f(x) = \begin{bmatrix} -\dfrac{\mu l_r}{J} F_{yr} \\ -\dfrac{\mu l}{J} F_{yr} + \dfrac{l_f m}{J} v_x v_\psi \end{bmatrix}; \qquad g(x) = \dfrac{1}{J} \begin{bmatrix} \mu l_f & 1 \\ 0 & 1 \end{bmatrix} \tag{14}$$

The full FL MIMO controller is:

$$\begin{bmatrix} F_{yf} \\ M_B \end{bmatrix} = J \begin{bmatrix} \dfrac{1}{\mu l_f} & -\dfrac{1}{\mu l_f} \\ 0 & 1 \end{bmatrix} \left( \begin{bmatrix} v_1 \\ v_2 \end{bmatrix} + \begin{bmatrix} \dfrac{\mu l_r}{J} F_{yr} \\ \dfrac{\mu l}{J} F_{yr} - \dfrac{l_f m}{J} v_x v_\psi \end{bmatrix} \right) \tag{15}$$

which can be rewritten in the form:

$$\begin{cases} F_{yf} = \dfrac{l_r}{l_f} F_{yr} + \dfrac{1}{\mu l_f} \left( J v_1 - M_B \right) \\ M_B = \mu l F_{yr} - l_f m v_x v_\psi + J v_2 \end{cases} \tag{16}$$

with the linear tracking terms

$$\begin{cases} v_1 = \dot{v}_{\psi d} + \alpha_1 (v_{\psi d} - v_{\psi}) + \beta_1 \int (v_{\psi d} - v_{\psi}) dt \\ v_2 = \dot{\zeta}_d + \alpha_2 (\zeta_d - \zeta) \end{cases} \qquad (17)$$

The controller (16), (17) guarantees tracking of the target $[v_{\psi d}, v_{yd}=0]$ and global asymptotic stability under the assumption full actuation capability (front tire invertibility (4) and Direct Yaw Moment through brakes).

On the other side, it requires continuous braking corrections. This approach could well fit using a continuous Direct Yaw Moment actuator, not intrusive for the driver feel, like Controllable Differentials.

With the relaxed goal of stabilizing instead of tracking $\zeta$ (or vy), remembering that if $v_{\psi}$ is stable $\zeta$ equation diverges only if rear tire saturates, the second equation in (16) can be replaced by the simpler law (12.1).

3. Arbitration

According to the controls organisation in Fig. 2 and to the above proposed control algorithms, the arbitration strategy should recognise the following STATES:

1. Normal driving & handling;
2. Handling & Understeering, Brakes Support (front tire saturating);
3. Handling & Oversteering, Brakes Support (rear tire saturating);

Relatively, the controller choice is the following;

| | | Steering correction: | (12.2), (12.3), (12.4); |
|---|---|---|---|
| 1. | | Brakes correction: - | |
| 2. | | Steering correction: | (12.2), (12.3), (12.4); |
| | | Brakes correction: | (12.5); |
| 3.1. | | Steering correction: | (12.2), (12.3), (12.4); |
| | | Brakes correction: | (12.1); |
| 3.2. | | Steering correction: | (13); |
| | | Brakes correction: | (12.1); |

STATE 1 - Normal driving & handling

This state occurs if none of the following are activated.

STATE 2 - Handling & Understeering

This state is recognised when the front axle tire request cannot be satisfied, due to current or incoming front tires saturation. This can be recognised, according to Fig. 8, mapping the tire saturation points in function of longitudinal slip (k) and vertical load ($F_z$). The map contains, for every k and $F_z$, the maximum $\mu$-normalised force the front axle can deliver and the state 2 is recognised when the $\mu$-normalised front tire force request is higher then the saturation point.

STATE 3 - Handling & Oversteering

The divergence of the state $\zeta$ (or of lateral velocity) in over-steering manoeuvres is caused by the generation of too high target yaw rate (not feasible by only steering), or by non-modelled dynamics.

This can be recognised by checking the ZERO DYNAMICS STABILITY condition (5) online, using actual yaw rate in place of its target value, as in the following outlined.

ZERO DYNAMICS STABILITY CHECK

IF

- rear tire is saturating ($|\alpha_r| > \alpha_{rSAT}$)
- $sign(\dot\zeta) = sign(v_\psi)$
  THEN

The ZERO DYNAMICS is INSTABLE with the current states and inputs.

$\dot\zeta$ can be computed using the relation:

$$\dot\zeta = \dot{v}_\psi - \frac{l_f m}{J}(a_y - v_x v_\psi) \qquad (18)$$

suitably filtered to remove the yaw rate derivation noise.

The choice of control action #1 or #2 can be made depending on the saturation status of the actuators: if the brakes are capable of delivering the requested over-steer correction moment (12.1) with the steer correction (12.2), (12.3), (12.4), then the choice will be #1, otherwise #2, in line with the concept that, in this state, priority is to reduce the value of $v_y$ more than tracking the yaw rate target value.

4. Yaw Rate Target Check

The risk of 'state 3' occurrence ($\zeta$ divergence) can be avoided by checking the target yaw rate vs. theoretic values, defined by eq. (5).

The target consistency check is better performed with the steady state values, as the steady state target yaw rate $v_{\psi dSS}$, is a known static function of steering angle and vehicle speed:

$$\mu(l_f + l_r)\max_{\alpha_r}(F_{yr}(\alpha_r, F_{zr:}, k_{r:})) \geq l_f m v_x |v_{\psi dSS}| \qquad (19)$$

and, if not satisfied, $V_{\psi dSS}$ is lowered till the condition is verified.

5. Brakes Pre-charging

Note that the braking intervention comes into action sometimes in a predictable time instant, i.e. when the front tire cannot deliver higher (in module) lateral forces anymore.

In order to improve the braking action response time, the brakes pressure is increased to a pre-charge calibration value when:

$$F_{prech\arg e} < |F_s| - F_{yfMAX}(F_z, k) < 0 \qquad (20)$$

Notice that in this case the braking action is not yet occurring (as the pre-charge pressure isn't high enough), but will with high probability occur in short time. The pre-charging action will give the advantage of improving the brake response time, if the force request will reach the saturation value, but if the request will not reach the saturation value the brakes pre-charging energy will be lost.

Important features of the invention described above are summarized by the following items:

A. Method for designing steering vehicle control, being split in two part, one nonlinear including the vehicle characteristics and one linear defining the required performance, where the linear part, according to (12.2), defines the target yaw acceleration, the nonlinear part first defines the $\mu$-normalised Front Wheel Force Target value (12.3) considering the $\mu$-normalised rear tire characteristic and then the defines the active steering correction (12.4) trough

$\mu$-normalised front tire characteristic inversion and additional state correction.

B. Method for designing an integrated vehicle control system using steering and a Direct Yaw Moment actuator, like Brakes, Traction, active Differentials or other.

C. Method according to B, where the steering correction is computed according to claim 1 where the braking correction is activated (according to the Arbitration management) when the rear tires are saturating and eq. (5) is getting instable, the braking Yaw Moment request is computed according to (12.5) and the actuation of the braking yaw moment is done with any known "torque to brakes" distribution procedure (i.e. brake rear inner wheel).

D. Method according to B, where the steering correction is computed according to A where the braking correction is activated (according to the Arbitration management) when the front tires are saturating and more lateral force is still required and the braking Yaw Moment request is computed according to (12.1) and the actuation of the braking yaw moment is done with any known "torque to brakes" distribution procedure (i.e. brake front outer wheel).

E. Method for designing an integrated vehicle control system according to A, B, C or D using steering and any other ideal actuator equivalently acting with an ideal Yaw Moment on the vehicle according to (3), where the active actuators are chosen according to the proposed Arbitration strategy.

F. Method according to A-D, or E where VGR functionality is integrated in the concept through the a-priori definition of the target vehicle behaviour and the extensively active feedback yaw control.

G. Method according to one of the previous items, whereby the driver is only indirectly connected to the vehicle through the definition of the target vehicle behaviour (based on driver input).

H. Method according to A,B,C,D or E where the model based tire dependency is $\mu$-normalised defined, allowing then either an easy m parameterisation or a friendly interface of the proposed algorithm to the $\mu$-estimation strategies.

I. Method according to A where counter-steering corrections are part of the controller formulations (12.2,3,4) and can occur either in oversteer and in understeer situations.

J. Method according to A,B,C,D or E where the controller decouples the yaw rate from the lateral velocity dynamics, resulting then in a more direct response "driver input" to "yaw rate", according to Fig. 13 and Fig. 10.

K. Method according to A,B,C,D or E where the tire x-y coupling is considered due to the compact front-rear expression (2) used in the computation of the controller action.

L. Method according to A,B,C or J where the risk of lateral velocity integral growth is mitigated predictively checking the target yaw rate according to (19) online and where not verified, lowering the values $v_{\psi d}$ or $\delta_D$ till the above conditions are verified.

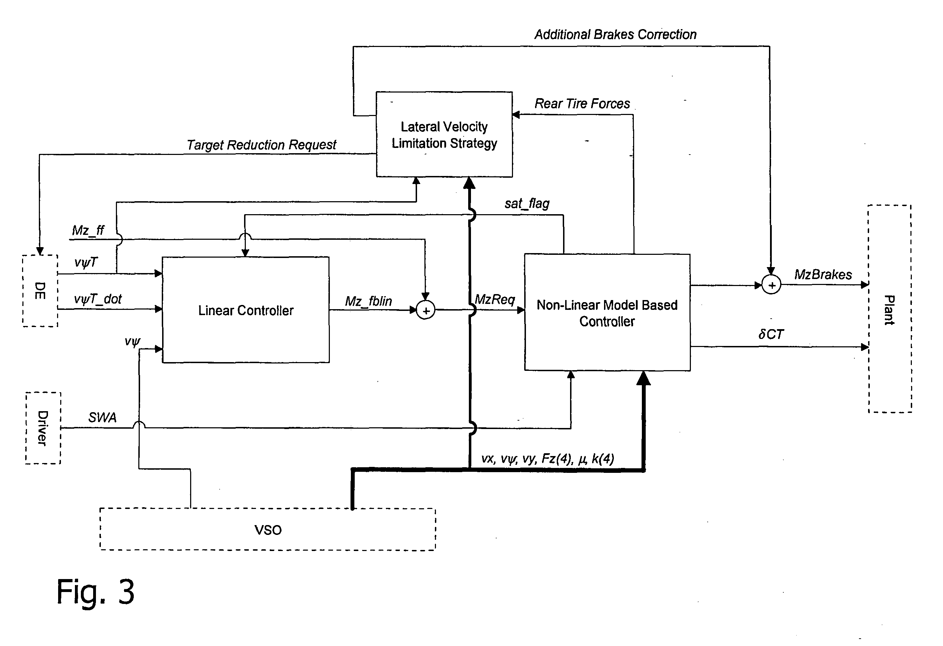

M. Method according to one of the previous items, where the controller validity is extended for external disturbances (side wind, road friction variations, road friction non-uniformities), through the a-priori definition of the target vehicle behaviour, the feedback disturbance reduction capabilities and the possibility of feed-forward compensation given by the external input $M_{z\_ff}$ (Fig. 3).

N. Method according to one of the previous items, where the brakes are preventively pre-charged according to the previous paragraph.

O. Method for designing an integrated vehicle control system using steering and a Direct Yaw Moment actuator where the full MIMO FL controller is chosen, according to (16), (17), where a continuous Direct Yaw Moment actuator is available.

## Claims

1. Yaw control method for a vehicle with a steering actuator and a direct yaw moment actuator, wherein the steering actuator is used as long as it is sufficient for a stable tracking of a target yaw rate, and wherein the direct yaw moment actuator is only used to assist said tracking if necessary and/or to prevent critical instabilities, **characterised in that** the vehicle dynamics are modelled according to

$$P: \begin{cases} \dot{v}_y = -v_x v_\psi + \dfrac{\mu}{m}\Big(F_{yf}(x,\delta_D + \delta_C, F_{zf:}, k_{f:}) + F_{yr}(x, F_{zr:}, k_{r:})\Big) \\ \dot{v}_\psi = \dfrac{\mu}{J}\Big(F_{yf}(x,\delta_D, \delta_C, F_{zf:}, k_{f:})l_f - F_{yr}(x, F_{zr:}, k_{r:})l_r\Big) + \dfrac{M_B}{J} \end{cases} \tag{3}$$

where

$m$ vehicle mass (Kg)
$J$ vehicle inertia momentum (kg m$^2$)
$l_f$, $l_r$ front and rear vehicle length (m)
$v_x$ vehicle longitudinal velocity (m/s)
$v_y$ vehicle lateral velocity (m/s)
$v_\psi$ vehicle yaw velocity (m/s)
$x=[V_y, V_\psi]'$ compact vehicle state vector
$\mu$ maximum tire-road friction coefficient
$k_{ij}$ tires longitudinal slip (front left, front right, rear left, rear right)
$F_{zij}$ tires vertical forces (front left, front right, rear left, rear right) (N)
$\delta_D$ driver road wheel angle component (rad)
$\delta_C$ controller road wheel angle component (rad)
$M_B$ Yaw Moment, resulting from controller active braking (Nm)
$F_{yf}$, $F_{yr}$ $\mu$-normalised tires lateral forces

and that the actuators are controlled with a full multiple-input multiple-output feedback linearization controller.

2. Method according to claim 1, **characterised by** a linear module defining a target yaw rate, and a nonlinear module calculating the associated commands for the steering actuator and/or for the yaw moment actuator.

3. Method according to claim 2, **characterised in that** the nonlinear module first defines the $\mu$-normalised Front Wheel Force Target value considering the $\mu$-normalised rear tire characteristic and then defines the active steering correction through $\mu$-normalised front tire characteristic inversion and additional state correction.

4. Method according to one of claims 1 to 3, **characterised in that** the direct yaw moment actuator comprises brakes, traction, or active differentials.

5. Method according to one of claims 1 to 4, **characterised in that** the target yaw rate is corrected to prevent critical instabilities.

6. Method according to one of claims 1 to 5, **characterised in that** the brakes are preventively pre-charged.

7. Method according to one of claims 1 to 6, **characterised by** an integration of a VGR functionality.

8. Yaw control device for a vehicle, **characterised in that** it is adapted to execute a method according one of claims 1 to 7.

**Patentansprüche**

1. Giersteuerverfahren für ein Fahrzeug mit einem Lenkaktuator und einem Direktgiermomentaktuator, wobei der Lenkaktuator verwendet wird, solange er für ein stabiles Verfolgen einer Sollgierrate ausreichend ist, und wobei der Direktgiermomentaktuator nur dazu verwendet wird, falls erforderlich, das Verfolgen zu unterstützen und/oder um kritische Instabilitäten zu verhindern,
   **dadurch gekennzeichnet, dass** die Fahrzeugdynamik

$$P: \begin{cases} \dot{v}_y = -v_x v_\psi + \dfrac{\mu}{m}\left(F_{yf}(x, \delta_D + \delta_C, F_{zf:}, k_{f:}) + F_{yr}(x, F_{zr:}, k_{r:})\right) \\ \dot{v}_\psi = \dfrac{\mu}{J}\left(F_{yf}(x, \delta_D, \delta_C, F_{zf:}, k_{f:})l_f - F_{yr}(x, F_{zr:}, k_{r:})l_r\right) + \dfrac{M_B}{J} \end{cases} \tag{3}$$

modelliert wird, wobei

m Fahrzeugmasse (kg)
J Fahrzeugträgheitsmoment (kg m$^2$)
$l_f$, $l_r$ Vorder- und Hinterfahrzeuglänge (m)
$V_x$ Fahrzeuglängsgeschwindigkeit (m/s)
$V_y$ Fahrzeugquergeschwindigkeit (m/s)
$V_\psi$ Fahrzeuggiergeschwindigkeit (m/s)
$x=[V_y, V_\psi]'$ kompakter Fahrzeugzustandsvektor
$\mu$ maximaler Reifen-Straßen-Reibungskoeffizient
$k_{ij}$ Reifenlängsschlupf (vorne links, vorne rechts, hinten links, hinten rechts)
$F_{zij}$ Reifenvertikalkräfte (vorne links, vorne rechts, hinten links, hinten rechts) (N)
$\delta_D$ Fahrerstraßenradwinkelkomponente (rad)
$\delta_C$ Steuerungsstraßenradwinkelkomponente (rad)
$M_B$ Giermoment, das sich aus aktiver Steuerungsbremsung ergibt (Nm)
$F_{yf}$, $F_{yr}$ p-normalisierte Reifenquerkräfte

und dass die Aktuatoren mit einer vollen MIMO-Rückkopplungslinearisierungssteuerung (MIMO - multiple input multiple output) gesteuert werden.

2. Verfahren nach Anspruch 1, **gekennzeichnet durch** ein lineares Modul, das eine Sollgierrate definiert, und ein nicht lineares Modul, das die zugehörigen Befehle für den Lenkaktuator und/oder für den Giermomentaktuator berechnet.

3. Verfahren nach Anspruch 2, **dadurch gekennzeichnet, dass** das nicht lineare Modul zuerst den $\mu$-normalisierten Vorderradkraftsollwert unter Berücksichtigung der $\mu$-normalisierten Hinterreifencharakteristik definiert und dann die aktive Lenkungskorrektur durch Inversion der $\mu$-normalisierten Vorderreifencharakteristik und zusätzliche Zustandskorrektur definiert.

4. Verfahren nach einem der Ansprüche 1 bis 3, **dadurch gekennzeichnet, dass** der Direktgiermomentaktuator Bremsen, Traktion oder aktive Differentiale umfasst.

5. Verfahren nach einem der Ansprüche 1 bis 4, **dadurch gekennzeichnet, dass** die Sollgierrate korrigiert wird, um kritische Instabilitäten zu verhindern.

6. Verfahren nach einem der Ansprüche 1 bis 5, **dadurch gekennzeichnet, dass** die Bremsen präventiv vorgeladen werden.

7. Verfahren nach einem der Ansprüche 1 bis 6, **gekennzeichnet durch** eine Integration einer VGR-Funktionalität (VGR - variable gear ratio).

8. Giersteuervorrichtung für ein Fahrzeug, **dadurch gekennzeichnet, dass** es zum Durchführen eines Verfahrens nach einem der Ansprüche 1 bis 7 ausgeführt ist.

**Revendications**

1. Procédé de commande de lacet pour un véhicule comprenant un actionneur de direction et un actionneur de moment de lacet direct, l'actionneur de direction étant utilisé tant qu'il est suffisant pour un suivi stable d'un taux de lacet voulu et l'actionneur de moment de lacet direct étant uniquement utilisé pour assister ledit suivi si nécessaire et/ou pour empêcher des instabilités critiques,
**caractérisé en ce que** les dynamiques du véhicule sont modélisées selon

$$
P \; : \; \begin{cases} \dot{v}_y = -v_x v_\psi + \dfrac{\mu}{m}\left(F_{yf}(x,\delta_D + \delta_C, F_{zf:}, k_{f:}) + F_{yr}(x, F_{zr:}, k_{r:})\right) \\[2ex] \dot{v}_\psi = \dfrac{\mu}{J}\left(F_{yf}(x,\delta_D,\delta_C, F_{zf:}, k_{f:})l_f - F_{yr}(x, F_{zr:}, k_{r:})l_r\right) + \dfrac{M_B}{J} \end{cases} \tag{3}
$$

où :

m désigne la masse du véhicule (kg)

J désigne le moment d'inertie du véhicule (kg m$^2$)

$l_f$, $l_r$ désignent la longueur avant et arrière du véhicule (m)

$v_x$ désigne la vélocité longitudinale du véhicule (m/s)

$v_y$ désigne la vélocité latérale du véhicule (m/s)

$v_\psi$ désigne la vélocité de lacet du véhicule (m/s)

$x = |v_y, v_\psi|'$ désigne le vecteur d'état du véhicule compact

$\mu$ désigne le coefficient de friction maximum entre le pneu et la route

$k_{ij}$ désigne le glissement longitudinal des pneus (avant gauche, avant droit, arrière gauche, arrière droit)

$F_{zij}$ désigne les forces verticales des pneus (avant gauche, avant droit, arrière gauche, arrière droit) (N)

$\delta_D$ désigne la composante angulaire de la roue du conducteur (rad)

$\delta_C$ désigne la composante angulaire de la roue du contrôleur (rad)

$M_B$ désigne le moment de lacet résultant du freinage actif du contrôleur (Nm)

$F_{yf}$, $F_{yr}$ désignent les forces latérales des pneus normalisées $\mu$

et **en ce que** les actionneurs sont commandés avec un contrôleur de linéarisation à contreréaction totale multiples entrées multiples sorties.

2. Procédé selon la revendication 1, **caractérisé par** un module linéaire définissant un taux de lacet voulu et un module non linéaire calculant les commandes associées pour l'actionneur de direction et/ou l'actionneur de moment de lacet.

3. Procédé selon la revendication 2, **caractérisé en ce que** le module non linéaire définit tout d'abord la valeur voulue de la force de la roue avant normalisée $\mu$ en tenant compte de la caractéristique du pneu arrière normalisée $\mu$ et définit ensuite la correction active de la direction par le biais de l'inversion de la caractéristique du pneu avant normalisée $\mu$ et d'une correction d'état supplémentaire.

4. Procédé selon l'une des revendications 1 à 3, **caractérisé en ce que** l'actionneur de moment de lacet direct comprend des freins, une traction ou des différentiels actifs.

5. Procédé selon l'une des revendications 1 à 4, **caractérisé en ce que** le taux de lacet voulu est corrigé pour empêcher les instabilités critiques.

6. Procédé selon l'une des revendications 1 à 5, **caractérisé en ce que** les freins sont pré-chargés de manière préventive.

7. Procédé selon l'une des revendications 1 à 6, **caractérisé par** une intégration d'une fonctionnalité VGR.

8. Dispositif de commande de lacet pour un véhicule, **caractérisé en ce qu'**il est conçu pour mettre en oeuvre un procédé selon l'une des revendications 1 à 7.

Fig. 1

Fig. 4

Fig. 6

Fig. 7

Fig. 8

Fig. 9

Fig. 10

Fig. 11

Fig. 12

Fig. 13

Fig. 14

Fig. 15

Arbiter

Checks on
- stability index
- plausibility of target yaw rate
- actuators autonomy /capabilities

**1. SISO:**

yaw rate control through only steering

active by default, as soon as the models are valid

**2. SIMO:**

yaw rate control through steering and brakes

active when saturating the front axle, steering not enough

**3.1 MIMO:**

yaw rate and lateral velocity control through steering and brakes

lateral velocity is diverging, needs to be limited; target yaw rate considered right

**3.2 SIMO:**

lateral velocity control through steering and brakes

lateral velocity is diverging, target yaw rate considered wrong and priority is to recover the lateral velocity

Fig. 2

24

Fig. 3

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4010332 A1